# EUROPÄISCHE PATENTSCHRIFT

(11) **EP 3 354 400 B1**
(45) Veröffentlichungstag und Bekanntmachung des Hinweises auf die Patenterteilung: **29.01.2020**
(21) Anmeldenummer: 17153936.4
(22) Anmeldetag: 31.01.2017
(51) Int. Cl.: B23Q 7/10, A61C 13/00, B23Q 11/08, B23Q 13/00

(54) **WERKZEUGMASCHINE FÜR DENTALZWECKE SOWIE SYSTEM AUS WERKZEUGMASCHINE UND WERKSTÜCK**
MACHINE TOOL FOR DENTAL PURPOSES AND SYSTEM CONSISTING OF MACHINE TOOL AND WORKPIECE
MACHINE-OUTIL DENTAIRE ET SYSTÈME COMPRENANT UNE MACHINE-OUTIL ET UNE PIÈCE À USINER

(43) Veröffentlichungstag der Anmeldung: 01.08.2018
(73) Patentinhaber: Ivoclar Vivadent AG, 9494 Schaan (LI)
(72) Erfinder: FARRÉR, Christoph, 8307 Effretikon (CH)
(74) Vertreter: Splanemann

(56) Entgegenhaltungen:
- EP-B1- 2 387 483
- FR-A5- 2 115 764

## Beschreibung

Die Erfindung betrifft eine Werkzeugmaschine, gemäß dem Oberbegriff von Anspruch 1, insbesondere eine Fräsmaschine für dentale Werkstücke, sowie ein System aus einer Werkzeugmaschine und einem Werkstück, insbesondere für ein dentales Werkstück, gemäß dem Oberbegriff von Anspruch 19.

Derartige Werkzeugmaschinen sind seit langem bekannt.

Sie weisen typischerweise ein Werkstückmagazin auf, das häufig drehbar gelagert ist, wobei die Werkstücke dem Außenumfang des Werkstückmagazins benachbart angeordnet sind.

Die Werkstücke bilden insofern in sich einen Kreis oder einen Teilkreis in der Anordnung an der Werkzeugmaschine.

Ein Beispiel für eine derartige Anordnung bei einer Dentalfräsmaschine lässt sich aus der EP 2 387 483 B1 entnehmen.

Derartige Lösungen bieten den Vorteil, dass zeitaufwendige Fräsvorgänge, beispielsweise von Dentalkeramiken, auch vorprogrammiert über Nacht oder am Wochenende vorgenommen werden können.

Das Magazin wird mit Fräsrohlingen als Werkstücken bestückt, und die betreffenden Rohlinge werden nach und nach gefräst und zu Dentalrestaurationsteilen verarbeitet.

Die Bestückung des Magazins erfolgt bevorzugt an einer bestimmten, von außen zugänglichen oder am ehesten zugänglichen Position, der sogenannten Beschickungsposition.

Zur Bearbeitung des Werkstücks wird das Werkstückmagazin an eine bestimmte Position gedreht, die so genannte Übergabeposition, an welcher ein Roboterarm oder eine sonstige Handhabe-Vorrichtung das Werkstück dem Magazin entnehmen kann und dem Fräsvorgang unterziehen kann.

Nach Fertigstellung wird das Werkstück dann typischerweise an die gleiche Stelle im Magazin in die Übergabeposition verbracht und das Magazin dreht sich, so dass das nächste Werkstück bearbeitet werden kann.

Die Bestückung des Magazins mit neuen Rohlingen und auch gegebenenfalls die Entnahme der fertigen Werkstücke erfolgt an der Bestückungsposition, die von der Übergabeposition verschieden ist.

Bei manchen Werkstückmagazinen lässt sich auch das Magazinrad insgesamt entnehmen, was jedoch ungünstig ist, wenn mindestens teilweise lediglich einzelne Werkstücke bearbeitet werden sollen.

Bei den bekannten Werkstückmagazinen erfolgt die Entnahme manuell, beispielsweise, indem die Halteklammer gemäß der EP 2 387 483 B1 gelöst wird, so dass das fertig gefräste Werkstück, im vorliegenden Fall in Scheibenform, manuell entnommen werden kann.

Derartige Lösungen erfordern es, das neue Werkstück exakt an die erwünschte Bestückungsposition zu verbringen und auch die Befestigungsklammern manuell zu betätigen, wenn ein neues Werkstück dort eingerastet werden soll.

Wenn nun bei dieser manuellen Handhabung die Bedienperson manuell etwas nachlässig ist, ist es möglich, dass das Werkstück versehentlich etwas neben der Bestückungsposition eingesetzt wird.

Der zugehörige Roboterarm kann dann das Werkstück nicht fassen, oder fasst es gegebenenfalls an einer falschen Stelle, so dass eine Fehlfräsung zu befürchten ist.

Häufig werden Dentalrestaurationsteile aus Komposit oder Keramikmaterial gefräst.

Das zu fräsende Dentalmaterial ist dann noch nicht vollständig hart gesintert, sondern liegt als relativ weicher Rohling vor, beispielsweise in Metasilikat-Form.

Gerade bei ungesinterten, also nicht verdichteten Werkstücken ist eine vorsichtige Handhabung sinnvoll, denn ein Abstoßen an Ecken führt gegebenenfalls zur Verschmutzung des Magazins und/oder der Werkzeugmaschine.

Auch sind manchmal Werkstückmagazine weniger gut zugänglich als bei der Lösung gemäß der EP 2 387 483 B1.

In diesen Fällen kommt es noch leichter zu Fehlhandhabungen bei der Bestückung - und gegebenenfalls auch bei der Entnahme der Werkstücke.

Wenn beispielsweise den Werkstücken in der Bestückungsposition weitere Werkstücke frei zugänglich sind - und gegebenenfalls nicht ohne weiteres sichtbar - kommt es leicht zu Verwechslungen, so dass ein falsches Werkstück entnommen wird, das dann wieder eingesetzt werden muss, was eine erneute Fehlhandhabung verursachen kann.

FR 2 115 764 A5 offenbart ein Speichersystem für Werkstücke oder Werkzeuge für mehrere Bearbeitungsstationen, mit ringförmig angeordneten Speicherplätzen in aufeinanderfolgenden Etagen. Jede Etage kann für sich in Abhängigkeit der Auslastung einer oder mehrerer Bearbeitungsstationen gedreht werden, wobei die einzelnen Etagen über Fördereinrichtungen mit den Bearbeitungsstationen verbunden sind. Die Etagen sind ringförmig ausgebildet und sind für die Ablage von Werkstücken oder Werkzeugen mit Fächern versehen, so dass diese die eigentlichen Speicherplätze bilden und frei drehbar sind, so dass die Werkstücke mittels einer Bestückungs- und Entleerungsvorrichtung in den Fächern eingebracht und herausgenommen werden können.

Daher liegt der Erfindung die Aufgabe zugrunde, eine Werkzeugmaschine gemäß dem Oberbegriff von Anspruch 1 sowie ein System gemäß dem Oberbegriff von Anspruch 19 zu schaffen, die hinsichtlich der Handhabung und Bedienung ohne nennenswerte Zusatzkosten verbessert sind, wobei auch die Wahrscheinlichkeit von Fehlbedienungen reduziert werden soll.

Diese Aufgabe wird erfindungsgemäß von Anspruch 1 bzw. 19 gelöst. Vorteilhafte Weiterbildungen ergeben sich aus den Unteransprüchen.

Gemäß einem Aspekt der Erfindung ist es besonders vorteilhaft, dass das Werkstück gegebenenfalls in einem Gehäuse, vertikal verfahrbar ist, um auch dann zugänglich zu sein, wenn die Bestückungsposition selbst am Werkstückmagazin nicht ohne weiteres zugänglich ist.

Das Werkstück wird von der manuell betätigten Liftplattform automatisch an die richtige Stelle in der Bestückungsposition verbracht und kann dort beispielsweise einrasten, so dass es im Werkstückmagazin sicher gelagert ist.

Eine manuelle Handhabung und deren Fehler, beispielsweise eine seitliche Abweichung beim Einschieben entfallen. Andererseits lässt es sich über die Liftplattform auch in eine Position bringen, in der es leicht zugänglich ist, also entnehmbar ist, bzw. durch ein neues Werkstück ersetzbar ist.

Gemäß einem weiteren besonders positiven Aspekt der Erfindung ist ein Gehäuse für das Werkstück vorgesehen.

Das Gehäuse umgibt das Werkstück bevorzugt teilweise. Es muss keine vollständige Flächenfüllung aufweisen, so dass auch ein Rahmen, beispielsweise auch ein lediglich L-förmiger Rahmen, hier unter dem Begriff Gehäuse zu subsumieren seien. Oder aber irgendein Element, das sich an 2, 3, 4, 5 oder 6 Seiten an dem Werkstück erstreckt. Auch dieses sei hier unten dem Begriff Gehäuse zu subsumieren.

Bevorzugt ist es jedenfalls, dass das Gehäuse eine Schutzfunktion ausübt, und das Werkstück mindesten an den Stellen umgibt, die empfindlich sind, und daher geschützt werden sollten.

Das Gehäuse kann aus gefalztem Blech bestehen, aber es ist auch möglich, einen entsprechenden Gitterrohrrahmen bereitzustellen. Die Seiten des Gehäuses können also mit Flächenfüllung, ohne Flächenfüllung oder teilweise mit Flächenfüllung ausgestattet sein.

Das Gehäuse nimmt das Werkstück bevorzugt so auf, dass es geschützt ist und zusätzlich an Haltelelementen des Magazins sicher aufnehmbar ist.

Das Gehäuse kann so gestaltet sein, dass es zusammen mit dem Werkstück der Liftplattform entnehmbar ist und in diese einsetzbar ist.

In einer Ausführungsform ist es bevorzugt, dass ein Teil des Werkstücks, insbesondere ein Halter, aus dem Gehäuse heraus ragt.

Der Halter kann dann in der Übergabeposition des Werkstückmagazins, also in der Position in der das Werkstück in den Fräsraum verbracht werden kann, von einem Roboterarm der Werkzeugmaschine mit dem freien Teil des Halters gegriffen und dem Gehäuse entnommen werden. Das Gehäuse verbleibt dann leer in der Übergabeposition.

Es erfolgt die spanabhebende Bearbeitung, beispielsweise über eine 5/0-Fräsmaschine, also mit 5 Freiheitsgraden für den Roboterarm und feststehender Frässpindel.

Nach Fertigstellung der Bearbeitung fährt dann der Roboterarm das fertiggestellte Werkstück wieder in das Gehäuse ein und gibt den Halter frei, so dass es zur Bestückungsposition verschwenkt werden kann und dort über die Liftplattform entnommen werden kann.

Die Art der Aufnahme des Werkstücks an oder in dem Gehäuse lässt sich in weiten Bereichen an die Erfordernisse anpassen.

Beispielsweise kann der Halter an seinem dem keramischen Teil des Werkstücks benachbarten Ende eine Nutanordnung aufweisen, bestehend aus zwei einander gegenüberliegenden Nuten.

In diese können Vorsprünge des Gehäuses eingreifen, beispielsweise Stege, an denen das Gehäuse endet und die aufeinander zu weisen.

Der Roboterarm kann dann das Werkstück mit seinen Nuten auf die Höhe der Stege bringen und seitlich in das Gehäuse einschieben, so dass es dort sicher gehalten ist.

Um die Lagerung zu verbessern, können die Stege auch mit endseitigen Rastzungen versehen sein, die den Halter etwas umgreifen und das Werkstück im Gehäuse fixieren.

Ein weiterer Vorteil des Gehäuses ist die geringere Verschmutzungsneigung des Werkstücks.

Wenn das Gehäuse zwei Seiten mit Flächenfüllung hat, kann der Benutzer das Werkstück samt Gehäuse fassen, ohne in Kontakt mit dem Werkstück zu gelangen. Hierdurch können beispielsweise gegen Hautfett empfindliche Keramiken oder sonstige Materialien vor der Aufnahme von Hautfett geschützt werden.

Für die insofern erwünschte Schutzfunktion des Gehäuses ist es lediglich erforderlich, dass sich das Gehäuse über den Nutzbereich des Werkstücks erstreckt. Der diesbezügliche Keramikkörper - oder sonstige Körper - kann beispielsweise auf einem Halter montiert sein, insbesondere über eine Klebeverbindung, wie es an sich bekannt ist. Der Halter dient der maschinellen Handhabung und kann in beliebiger geeigneter Weise ausgebildet sein, beispielsweise rund, eckig oder pilzförmig. Er ist so ausgebildet, dass er sich von den Spannzangen eines Roboterarms leicht greifen lässt, so dass eine präzise Führung in der Relativbewegung zwischen einer Schleif- oder Frässpindel und dem Roboterarm möglich ist, und das Werkstück sich mit der erwünschten Genauigkeit von beispielsweise 10, 20 oder 30 Mikrometern genau verarbeiten lässt.

Besonders günstig ist die gemäß einer Ausführungsform der Erfindung vorgesehene Liftplattform in Kombination mit einem Werkstückmagazin, dessen Zugänglichkeit beschränkt oder nicht gegeben ist. Hierbei ist unter Zugänglichkeit die Zugänglichkeit von außen, also von außerhalb der Werkzeugmaschine zu verstehen, wobei diese stets relevant ist, um die Werkstücke in Form von Rohlingen der Werkzeugmaschine zuzuführen bzw. in Form von Fertigprodukten oder Halbprodukten der Werkzeugmaschine nach der Bearbeitung der Werkstücke durch diese zu entnehmen.

Diese Gesichtspunkte sind insbesondere bei kompakten Werkzeugmaschinen relevant. Als Beispiel hierfür seien die sogenannten "Chairside"-Fräsmaschinen genannt, die in Zahnartzpraxen verwendet werden.

Erfindungsgemäß bevorzugt ist es, wenn eine derartige kompakte Fräsmaschine einen Spindelmotor und eine Spindel hat, die relativ weit unten montiert sind. Das Hauptgewicht der Fräsmaschine ist dann im unteren Bereich, was der Standsicherheit zugute kommt. Erfindungsgemäß ist dann günstigerweise das Werkstückmagazin an der gegenüberliegenden Seite des Bearbeitungsraums, also oben.

Erfindungsgemäß ebenfalls günstig ist es hierbei dann, wenn die Werkstücke hängend in dem Werkstückmagazin untergebracht sind. Unter hängender Unterbringung ist hierbei einerseits zu verstehen, dass mindestens ein Teil des Werkstücks dergestalt aus der Ebene des Werkstückmagazins heraushängt, dass es greifbar ist, beispielsweise von dem Roboterarm für die Handhabung des Werkstücks oder von einer anderen Greifhandhabe. Bevorzugt hängt ein Halter des Werkstücks aus dem Werkstückmagazin heraus, mindestens in der sogenannten Übergabeposition, und ist dann von Spannbacken des Roboterarms greifbar. Andererseits kann ein Gehäuse des Werkstücks oder das Werkstück selbst hängend an dem Magazin gelagert sein.

Insofern ist es günstig, wenn auch in der Bestückungsposition die Werkstücke hängend angeordnet sind. Der freie Bereich erstreckt sich dann typischerweise versteckt nach unten, zumindest dann, wenn eine seitliche Tür oder ein seitlicher Zugang für den Bestückungsraum vorgesehen ist. Dieser ist schlecht einsehbar, mindestens dann, wenn sich die Werkzeugmaschine oder Fräsmaschine insgesamt unterhalb der Augenhöhe des Betrachters befindet, was bei kleinen Fräsmaschinen typischerweise der Fall ist.

Erfindungsgemäß ist für die saubere Bestückung und Entnahme eine Liftplattform vorgesehen, die das Werkstück in die Bestückungsposition im Werkstückmagazin verbringt und ein fertiges Werkstück aus dieser entnimmt.

Die Liftplattform lässt sich vertikal verfahren, also aus der oberen Position, die der Bestückungsposition des Werkstücks nahe ist, in eine untere Position, und zurück.

In der unteren Position ist das Werkstück dann erfindungsgemäß günstigerweise frei zugänglich und lässt sich von dort leicht entnehmen. Auch ein neues Werkstück lässt sich dort leicht einstellen.

Unter hängender Anordnung des Werkstücks ist insbesondere aber auch zu verstehen, dass das Werkstück, das günstigerweise von einem Gehäuse umgeben ist, über dieses aufgehängt ist. Die Aufhängung kann über ein oder mehrere Halteelemente erfolgen, die in jeder Position des Werkstückmagazins vorgesehen sind, und in die Rastzungen oder andere geeignete Befestigungselemente des Gehäuses - oder gegebenenfalls des Werkstücks - einrasten können.

Die Rastzungen können in einer bevorzugten Ausführungsform an einem Stehsteg, also einem nach oben weisenden Steg, des Gehäuses ausgebildet sein, welcher Steg sich mittig von vorne nach hinten erstreckt und in sich die Haltezungen ausgebildet hat.

Es versteht sich, dass anstelle dessen auch eine beliebige andere Art der Lagerung des Gehäuses - oder des Werkstücks - in dem Werkstückmagazin möglich ist, ohne den Bereich der Erfindung zu verlassen, wobei eine einschnappende oder einrastende Verbindung bevorzugt ist.

Eine derartige Verbindung ermöglicht es, dass die Liftplattform das Gehäuse mit dem Werkstück in die obere Position bringt und beim Absenken der Liftplattform das Gehäuse mit dem Werkstück oben hängen bleibt und weitertransportiert werden kann.

In weiterer vorteilhafter Ausgestaltung weist das Werkstückmagazin auch Plätze für die Aufnahme von Werkzeugen auf. Auch diese können an ähnlichen Teilgehäusen aufgenommen werden, wobei die Aufhängung über Stege oben an den Gehäusen und entsprechende Rastzungen in gleicher Weise erfolgen kann wie zuvor anhand der Werkstückgehäuse beschrieben. Die Werkzeuge können ebenfalls Nuten aufweisen, in die Vorsprünge oder Federzungen der Gehäuse an deren unterem Ende eingreifen können, um die Werkzeuge zu lagern. Auch hier kann über eine entsprechende U-förmige Greifhandhabe an dem Roboterarm eine Entnahme der Werkzeuge an einer Übergabeposition erfolgen.

In vorteilhafter Ausgestaltung sind dann insofern zwei übereinander liegende Nuten an jedem Werkzeug vorgesehen, wobei die obere Nut für den Eingriff der Federzungen des Gehäuses bestimmt ist, und die untere Nut für den Eingriff von Greifhandhaben des Roboterarms. Nach Entnahme aus dem betreffenden Werkzeuggehäuse kann dann das Werkzeug über den Roboterarm dem Spannfutter der Spindel zugeführt werden.

Erfindungsgemäß besonders günstig ist es, dass die Werkstücke, trotz hängender Lagerung im Werkstückmagazin, auch bei rascher Drehbewegung des Werkstückmagazins nicht aneinander anschlagen, da sie je in ihren Gehäusen aufgehoben sind. Auch können die Werkzeuge durch ein Anstoßen nicht seitlich aus ihren Halterungen in Form der Rastzungen der Gehäuse herausgeschlagen werden, denn auch diese sind geschützt in den Gehäusen aufgenommen, mindestens soweit, wie es erforderlich ist.

Erfindungsgemäß günstig ist die Realisierung des Werkstückmagazins in Teilkreisform, also über einen Kreisbogen von beispielsweise 90°. Es versteht sich, dass anstelle dessen auch eine beliebige andere Form des Werkstückmagazins realisierbar ist, ohne den Bereich der Erfindung zu verlassen, also beispielsweise eine Vollkreisform, eine Kreissegmentform, eine Bogenform, eine ovale Form oder auch eine gerade Form. Auch ein an sich bekanntes umlaufendes Werkstückmagazin mit zwei oder mehr Längsseiten ist erfindungsgemäß nicht ausgeschlossen.

Auch wenn hier gemäß der bevorzugten Ausführungsform die zusätzliche Aufnahme von Werkzeugen in das Werkstückmagazin beschrieben ist, versteht es sich, dass anstelle dessen auch ein reines Werkstückmagazin erfindungsgemäß nicht ausgeschlossen sein soll. In einer modifizierten Ausgestaltung der Erfindung ist anstelle des Werkstückmagazins ein reines Werkzeugmagazin vorgesehen, und die Bestückung und Beschickung des insofern vorgesehenen Werkzeugmagazins erfolgt dann sinngemäß in gleicher Weise, wie anlässlich des Werkstückmagazins beschrieben.

Erfindungsgemäß besonders günstig ist es, dass die Bewegungsrichtung des Lifts oder der Liftplattform quer zur Bewegungsrichtung des Magazins erfolgt. Hierdurch ergibt sich die Möglichkeit, selektiv die erwünschte Position anzusteuern und an dieser Stelle das Werkstück zu entnehmen bzw. an diese Stelle das Werkstück zu verbringen.

Die Liftplattform kann sowohl maschinell als auch manuell bewegt werden. Für die automatische maschinelle Bewegung lässt sich beispielsweise ein hydraulischer oder pneumatischer Zylinder oder ein entsprechender Elektromotor einsetzen. Bevorzugt ist demgegenüber die manuelle Bewegbarkeit der Liftplattform. Hierzu kann kurzerhand eine sich quer erstreckende Greifhandhabe vorgesehen sein, über welche der Benutzer ein Anheben und Absenken der Liftplattform vornimmt. Bevorzugt ist es, dass die Bewegungsrichtung vertikal ist, wobei es sich versteht, dass auch eine im Wesentlichen vertikale Bewegung hierunter zu subsumieren ist. Mit "im Wesentlichen" sei hier eine Abweichung von 5, 10 oder aber auch 20 Grad oder Prozent gegenüber der vertikalen Richtung gemeint.

Besonders günstig ist es auch, dass das Befüllen und die Entnahme der Werkstücke in bzw. aus dem Werkstückmagazin stets an den gleichen Stellen stattfinden kann. Die Beladung erfolgt über die Bestückungsposition. Das Magazin wird mit dem betreffenden Werkstück in die Übergabeposition gedreht, von dort erfolgt die Entnahme des Werkstücks aus dem Gehäuse durch den Roboterarm.

Nach Bearbeitung des Werkstücks wird das Werkstück wieder in das Gehäuse eingeschoben, wiederum an der Übergabeposition, und das Magazin wird zurück geschwenkt.

Das fertig bearbeitete Werkstück erreicht dann die Bestückungsposition, und dort kann wiederum über die Liftplattform das Werkstück fertig bearbeitet entnommen werden.

Aufgrund der eindeutigen Förderwege und Bewegungswege des Werkstücks innerhalb der Fräsmaschine ergeben sich so geringe Fehlertoleranzen und eine präzise Fertigung; beispielsweise vermag der Roboterarm den Halter des Werkstücks dann von Werkstück zu Werkstück je an der gleichen Stelle zu greifen.

Die Lagerung des Werkstücks in dem Gehäuse kann in beliebiger geeigneter Weise erfolgen. Bevorzugt erfolgt die Beladung des Gehäuses mit dem Werkstück und die Entnahme des Werkstücks aus dem Gehäuse seitlich, also in horizontaler Richtung. Dies lässt sich über einen Roboterarm leicht realisieren, und durch das Eigengewicht des Werkstücks im Gehäuse ist eine sichere Lagerung auch bei vertikaler Bewegung gewährleistet. Zusätzlich kann über eine Rastvorrichtung sichergestellt sein, dass das Werkstück sich nicht versehentlich aus dem Gehäuse löst.

Bevorzugt sind im Halter des Werkstücks Nuten vorgesehen, in die Stege des Gehäuses eingreifen. Anstelle der Stege können auch beliebige andere Vorsprünge am Gehäuse in die Nuten eingreifen, und es ist auch möglich, diese Elemente kinematisch zu vertauschen.

Weitere Vorteile, Einzelheiten und Merkmale ergeben sich aus der nachfolgenden Erläuterung der Erfindung in mehreren Ausführungsbeispielen anhand der Zeichnungen.

Es zeigen:
- Fig. 1: eine ausschnittweise schematische Seitenansicht einer erfindungsgemäßen Werkzeugmaschine, unter teilweiser Darstellung des Werkstückmagazins;
- Fig. 2: eine perspektivische Seitenansicht eines Teils des Werkstückmagazins;
- Fig. 3: eine Ansicht einer erfindungsgemäßen Liftplattform mit eingesetztem Werkstück und Werkstückgehäuse;
- Fig. 4: eine Ansicht einer weiteren Ausführungsform der Liftplattform mit eingesetztem Werkstück und Werkstückgehäuse;
- Fig. 5: eine Ansicht der Liftplattform gemäß Fig. 4 von hinten;
- Fig. 6a: eine perspektivische Ansicht eines Werkstückgehäuses;
- Fig. 6b: das Werkstückgehäuse gemäß Fig. 6a, jedoch aus einer anderen Perspektive;
- Fig. 6c: das Werkstückgehäuse gemäß Fig. 6b mit eingesetztem Werkstück;
- Fig. 6d: Detailansichten von Fig. 6c;
- Fig. 7a: eine perspektivische Ansicht eines Werkzeuggehäuses;
- Fig. 7b: eine Detailansicht zu Fig. 7a mit eingesetztem Werkzeug; und
- Fig. 8: eine schematische Schnittansicht einer weiteren Ausführungsform einer erfindungsgemäßen Liftplattform.

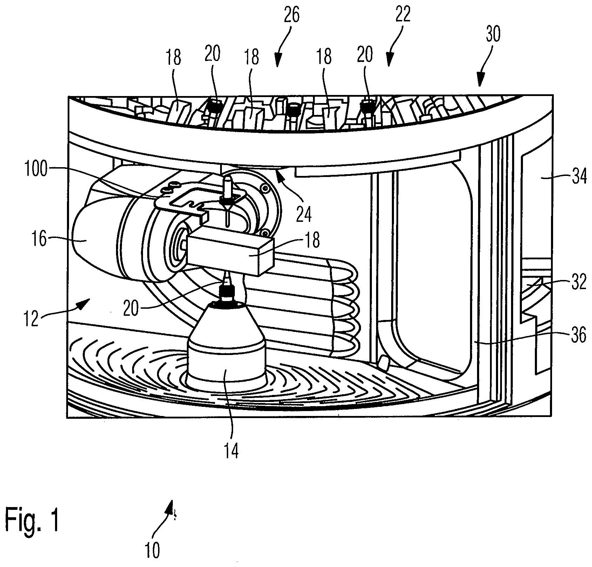

In Fig. 1 ist eine Ausführungsform einer erfindungsgemäßen Werkzeugmaschine 10 dargestellt. Die Werkzeugmaschine ist im dargestellten Ausführungsbeispiel als Fräsmaschine für Dentalzwecke ausgebildet. Es versteht sich, dass die Erfindung gleichermaßen an beliebigen anderen spanabhebenden Bearbeitungsmaschinen einsetzbar ist, insbesondere an kompakten Werkzeugmaschinen, zu denen beispielsweise auch Schleifmaschinen oder Drehschleifmaschinen für die Dentalindustrie gehören.

Die Werkzeugmaschine 10 weist einen Fräsraum 12 auf, in dem eine Werkzeugspindel 14 von einem Spindelmotor angetrieben läuft. Ein Roboterarm 16 vermag der Spindel 14 ein Werkstück 18 in geeigneter Weise zuzuführen, wobei der Roboterarm 16 fünfachsig gelagert ist und die Werkzeugspindel 14 feststehend angeordnet ist.

Die Werkzeugspindel 14 nimmt ein Werkzeug 20 auf, das sie in an sich bekannter Weise in ihren Spannbacken hält.

Die Werkzeugspindel 14 ist am Boden des Fräsraums 12 gelagert. Der Spindel 14 gegenüberliegend, also an der Ecke des Fräsraums 12, ist ein Werkstückmagazin 22 gelagert. Das Werkstückmagazin 22 erstreckt sich oberhalb des Fräsraums 12 und ist von diesem durch die nicht dargestellte Deckenwand getrennt. Über eine Tür 24 lässt sich an einer Übergabeposition 26 des Werkstückmagazins 22 ein Werkstück dem Magazin 22 entnehmen bzw. in dieses einführen.

Das Werkstückmagazin 22 ist etwa viertelkreisförmig und schwenkbar gelagert, so dass jedes beliebige Werkstück in die Übergabeposition 26 gebracht werden kann. Zusätzlich nimmt es zwischen den Werkstücken 18 auch Werkzeuge 20 auf.

Nicht oberhalb des Fräsraums 16, sondern demgegenüber seitlich versetzt, ist ferner eine Beschickungsposition 30 vorgesehen. Die Beschickungsposition 30 erlaubt es, Werkstücke und Werkzeuge im Rohlingzustand dem Magazin 22 zuzuführen und fertiggestellte Werkstücke von dort zu entnehmen.

Unterhalb der Beschickungsposition 30 ist eine Liftplattform 32 vorgesehen. Diese ist dazu bestimmt, das Werkzeug bzw. das Werkstück in der unteren Position der Liftplattform 32 zu entnehmen.

Die Liftplattform 32 ist in einem Vorraum 34 beweglich gelagert. Dieser ist über eine Trennwand 36 von dem Fräsraum 12 getrennt.

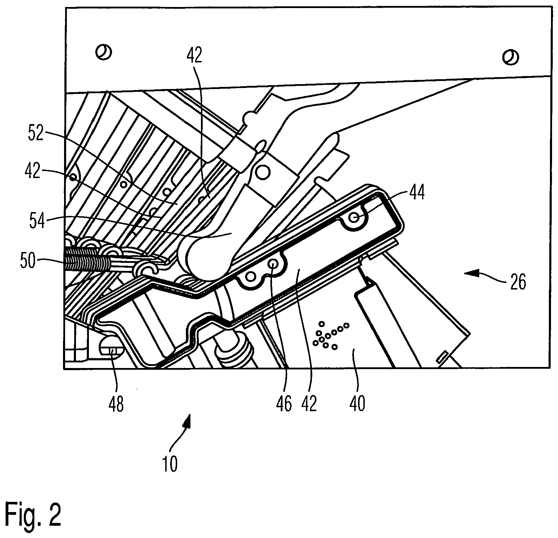

Ein Detail der Werkzeugmaschine 10 ist aus Fig. 2 ersichtlich. Es handelt sich um die Übergabeposition 26 des Werkstückmagazins 22. Wie ersichtlich ist, ist beispielsweise ein Werkstück in einem Gehäuse 40, einem Werkstück-Gehäuse, aufgenommen und an einem Hebel 42 gelagert. Der Hebel 42 weist hierzu Halteelemente 44 und 46 auf, die weiter unten im Einzelnen beschrieben sind. Der Hebel 42 ist an einer Achse 48 schwenkbeweglich gelagert. Über eine Zugfeder 50 wird er in eine obere Position 52 gezogen.

Mehrere Hebel 42 sind hinter dem hier betrachteten Hebel 42 dargestellt, und zwar in der oberen Position.

Der Hebel 42 in der Übergabeposition 26 wird über ein Betätigungselement 54 gegen die Wirkung der Feder 50 nach unten verschwenkt.

Bevorzugt erfolgt das Verschwenken soweit, dass sich der Hebel 42 im Wesentlichen horizontal erstreckt.

In dieser Position kann das Gehäuse 40 mit dem dort aufgenommenen Werkstück 18 leicht entnommen werden.

In der oberen Stellung, in der sich die Hebel 42 in einem Winkel von etwa 45° nach schräg oben erstrecken und in der das Betätigungselement 54 nicht aktiv ist, lässt sich das Werkstückmagazin 22 frei drehen. Hingegen wird die Drehposition des Werkstückmagazins 22 fixiert, wenn ein Hebel 42 - und damit das zugehörige Gehäuse 40 mit dem Werkstück 18 - in der Übergabeposition 26 abgesenkt werden soll. Hierzu wird dann das Betätigungselement 54 aktiviert und das Werkstück mit dem Gehäuse 40 abgesenkt, so dass der Roboterarm 16 es leichter greifen kann.

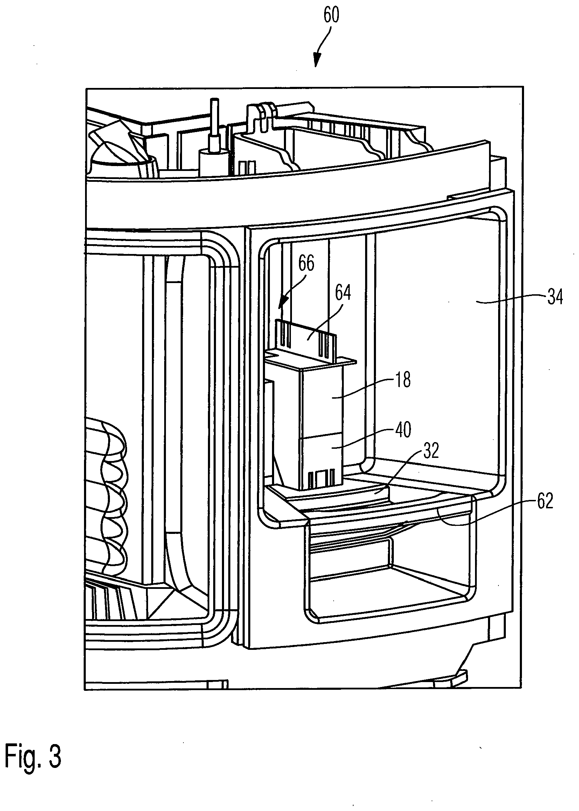

Eine entsprechende Ausgestaltung mit einem Betätigungselement 54 ist auch für die in Fig. 3 schematisch dargestellte Beschickungsposition 60 vorgesehen; auch hier ist ein Betätigungselement angeordnet, auch wenn dies aus Fig. 3 nicht ersichtlich ist.

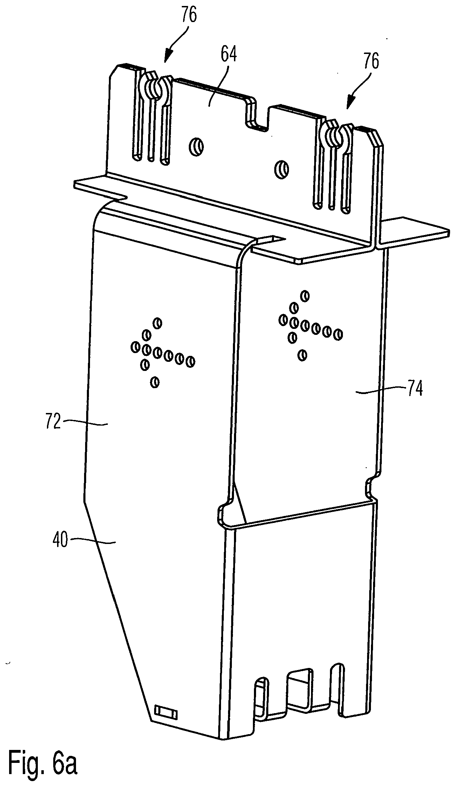

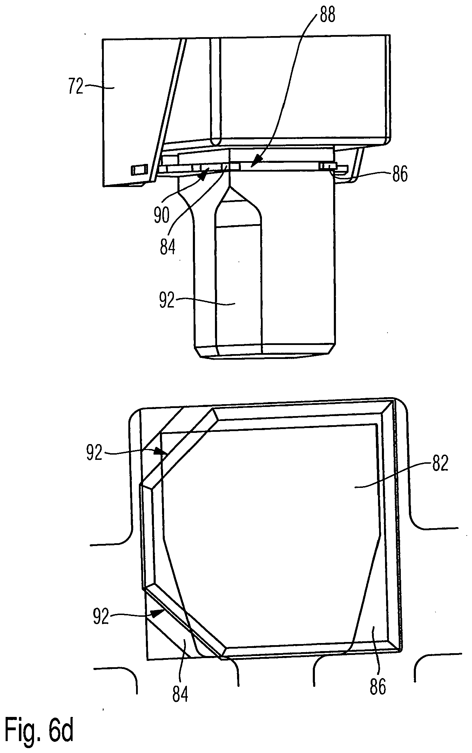

Die Beschickungsposition 60 ist oberhalb des Vorraums 34 angeordnet. Dort ist die Liftplattform 32 angeordnet, und zwar vertikal beweglich geführt. In dem in Fig. 3 dargestellten Zustand trägt die Liftplattform 32 ein Gehäuse 40, das mit einem Werkstück 18 bestückt ist. Zu der genaueren Ausgestaltung des Gehäuses 40 sei auf die Figuren 6a bis 6d verwiesen.

Die Liftplattform 32 weist eine Greifhandhabe 62 auf, die sich nach der Art eines Bügels im Wesentlichen horizontal und quer vorne, also an der Vorderseite des Vorraums 34, erstreckt. Durch manuelle Betätigung lässt sich die Liftplattform 32 von der in Fig. 3 dargestellten unteren Position in eine obere Position bewegen. In der oberen Position ist die Liftplattform 32 nahe der Beschickungsposition 60 des Werkstückmagazins 22. Das Gehäuse 40 weist an seiner Oberseite einen sich von hinten nach vorne erstreckenden Steg 64 auf, an dem Rastzungen ausgebildet sind, wie es aus Fig. 6a ersichtlich ist. Diese Rastzungen sind dafür geeignet, in die Halteelemente 44 des Werkstückmagazins 22 einzuschnappen und das Gehäuse 40 mitsamt dem Werkstück 18 festzuhalten, sobald über die Greifhandhabe 62 die Liftplattform 32 in die obere Position gebracht wird.

Für die Verbringung des Werkstücks 18 in den Fräsraum 12 wird nun durch Freigabe des Betätigungselements 54 der zugehörige Hebel 42 in der Beschickungsposition durch die Wirkung der Feder 50 angehoben. Das betreffende Werkstück in dem Gehäuse 40 wird sodann durch das Werkstückmagazin 22 in die Übergabeposition 26 verschwenkt, wo es erneut abgesenkt wird, so dass der Roboterarm 16 einen nach unten vorragenden Halter des Werkstücks greifen und das Werkstück dem Gehäuse 40 entnehmen kann.

Nach Fertigbearbeitung erfolgt ein Transport in umgekehrter Richtung, mit entsprechendem Absenken und Anheben des Hebels 42 des Werkstückmagazins 22.

Die Liftplattform 32 kann zwischenzeitlich auch abgesenkt werden, um zu ermöglichen, ein weiteres, in einem Gehäuse aufgenommenes Werkstück dem Werkstückmagazin 22 zuzuführen.

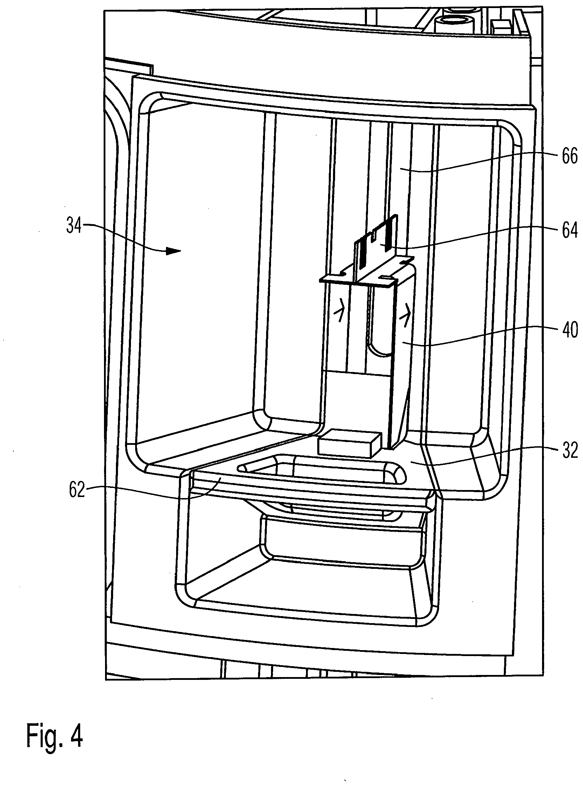

In Fig. 4 ist der Vorraum 34 aus einer anderen Perspektive als in Fig. 3 dargestellt. Das Gehäuse 40 ist hier nicht mit einem Werkstück bestückt. Die Liftplattform 32 ist an einer Schiebeführung 66 vertikal geführt.

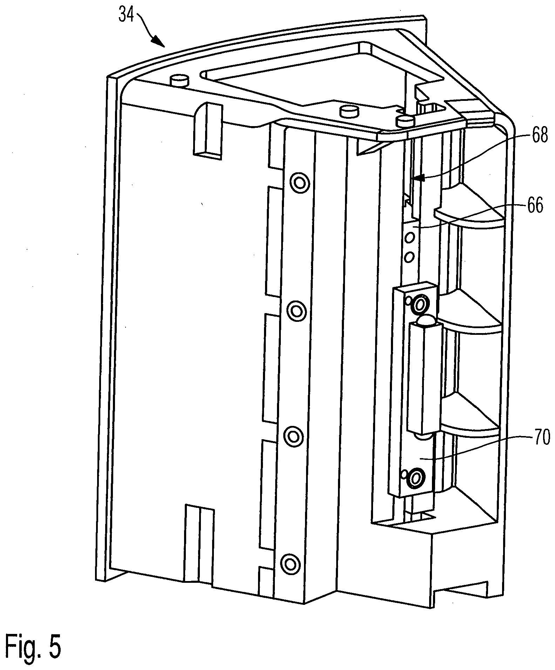

Eine rückwärtige Ansicht des Vorraums 34 ist aus Fig. 5 ersichtlich. Die Schiebeführung 66 weist einen Schlitz 68 auf, der sich vertikal an der Rückwand des Vorraums 34 erstreckt. Diesen durchtritt ein Steg, der an der Liftplattform 32 hinten angebracht ist. Eine Gegenplatte 70 ist an dem Steg befestigt und etwas breiter als der Schlitz 68. Das Spiel der Gegenplatte 70 gegenüber der Rückwand des Vorraums 34 ist so bemessen, dass die Liftplattform 32 selbsthaltend ist, so dass sie an der Höhe verbleibt, auf die der Benutzer sie eingestellt hat.

Es versteht sich, dass anstelle der hier dargestellten Führung auch beliebige andere Führungen möglich sind, beispielsweise auch mit einer einstellbaren Bremse zur Einstellung der Verstellkraft.

Aus Fig. 6a ist eine perspektivische Ansicht eines Gehäuses 40 ersichtlich. Das Gehäuse weist geschlossene Seitenwände 72 und 74 auf. Über diese lässt sich die Einheit aus Werkstück und Gehäuse leicht greifen. Der Steg 64 ist mit zwei Federzungen-Anordnungen 76 ausgestattet, die für das Übergreifen von Halteelementen 44 und 46 des Werkstückmagazins bestimmt sind.

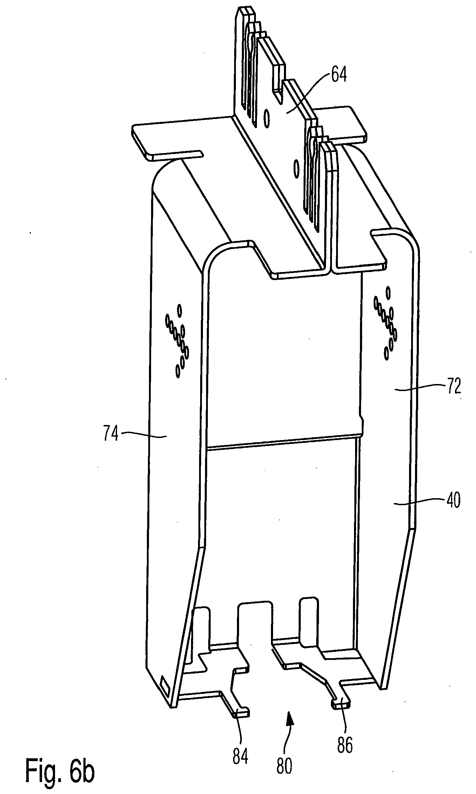

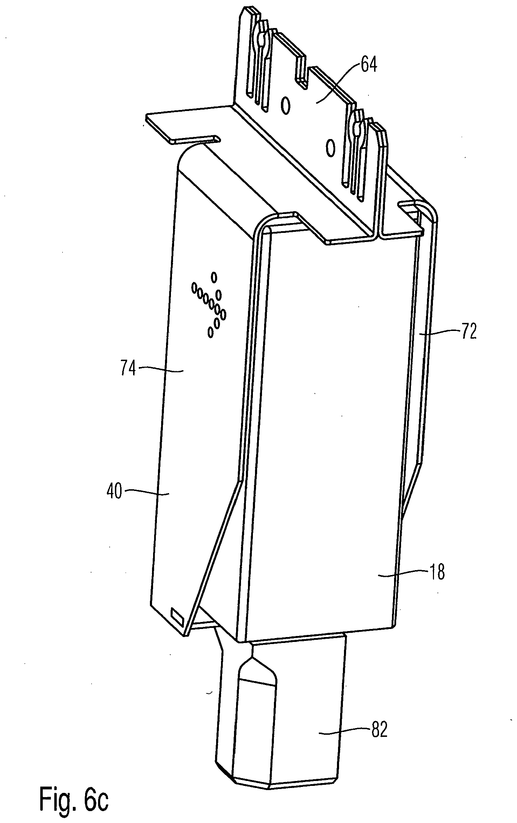

Eine perspektivische Darstellung des Gehäuses 40 aus einem anderen Betrachtungswinkel ist aus Fig. 6b ersichtlich. Das Gehäuse 40 weist eine offene Rückwand und unten eine Ausnehmung 80 auf, die dafür bestimmt ist, einen Halter 82 (Fig. 6c) eines Werkstücks 18 durchtreten zu lassen. Die Ausnehmung 80 ist von leicht federnden Rastzungen 84 und 86 begrenzt, die endseitig etwas einwärts vorspringen, so dass sie den Halter 82 sicher halten können.

Wie aus Fig. 6c ersichtlich ist, ist das Werkstück 18 in eingeführtem Zustand von dem Gehäuse 40 an mindestens zwei Seiten umgeben. Die Beschickung erfolgt horizontal, über die offene Rückwand des Gehäuses. Der Halter 82 des Werkstücks 18 ragt nach unten aus dem Gehäuse heraus. Fig. 6c zeigt, dass der Halter 82 eine Nut 88 aufweist, in die die Rastzungen 84 und 86 eindringen können. Bezogen auf die Seitenwände 72 und 74 bilden die Rastzungen 84 und 86 einwärts weisende Vorsprünge 90.

Der Halter 82 hat einen im Wesentlichen quadratischen Querschnitt. Er ist jedoch für die unverwechselbare Lagerung am Roboterarm 16 mit zwei Schrägflächen 92 versehen, die sich in einem Winkel von etwa 45° zu den benachbarten Flächen erstrecken.

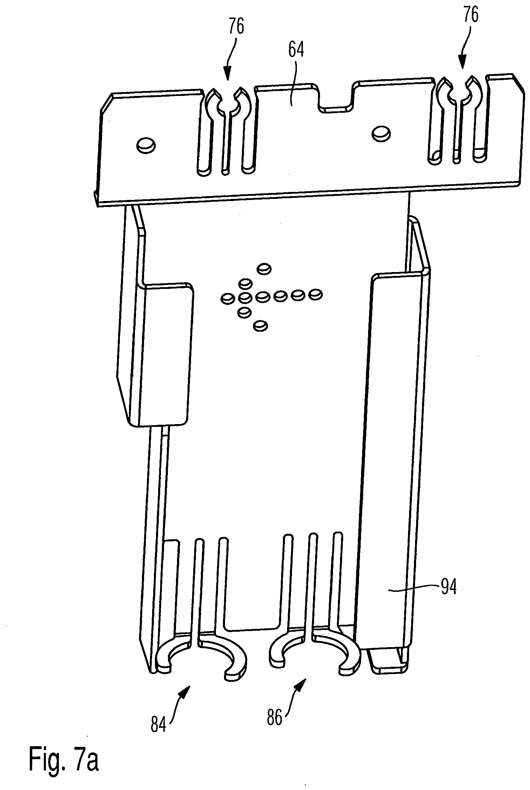

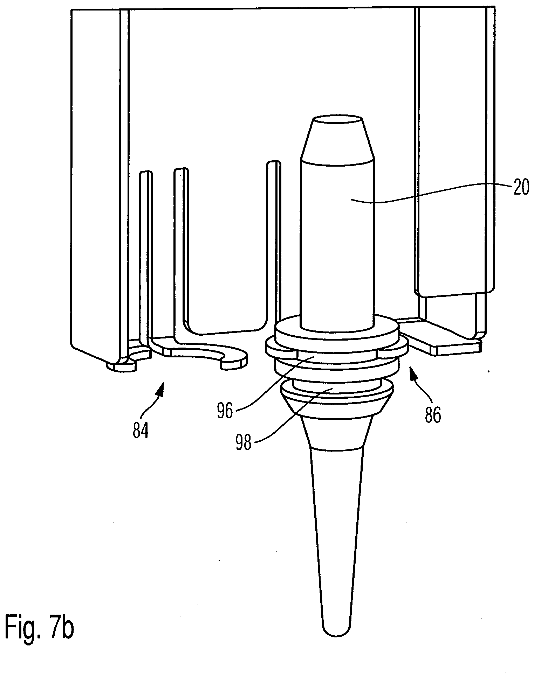

Ein Gehäuse 94 für Werkzeuge ist aus Fig. 7a ersichtlich. Dieses weist ebenfalls einen Steg 64 mit Federzungenanordnungen 76 oben mittig auf. Unten sind zwei Rastzungenanordnungen 84 und 86 ausgebildet, die der Aufnahme je eines Werkzeugs 20 dienen. Dies ist in Fig. 7b dargestellt. Das Werkzeug 20 weist hierzu eine obere Nut 96 auf, in die die Rastzungenanordnung 86 eindringt. Zusätzlich ist eine untere Nut 98 vorgesehen, die von einer Greifhandhabe 100 des Roboterarms 16 (vergl. Fig. 1) erfassbar ist, um durch seitliche Bewegung das Werkzeug 20 aus der Position in der Rastzunge 86 heraus zu bewegen.

Für die Bereitstellung in der Werkzeugspindel 14 wird der Roboterarm 16 um 180° gedreht, so dass der Schaft des Werkzeugs 20 in das dortige Spannfutter einführbar ist.

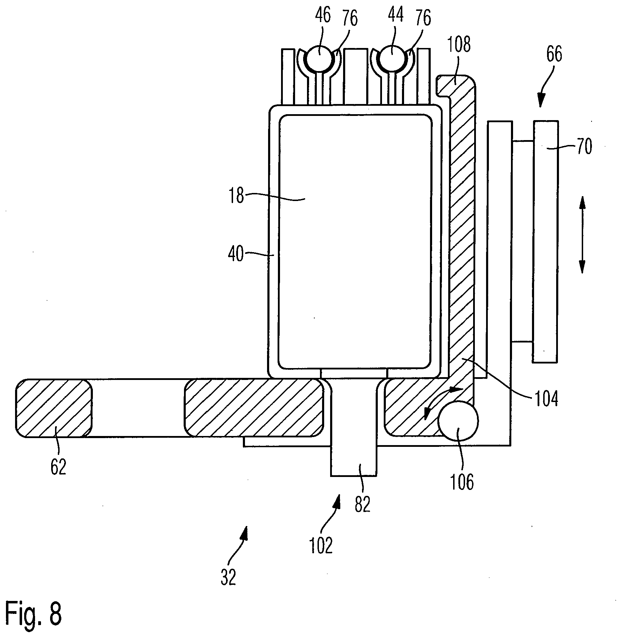

Eine modifizierte Ausgestaltung der Liftplattform 32 ist aus Fig. 8 ersichtlich. Es ist ersichtlich, dass der Halter 82 des Werkstücks 18 eine Ausnehmung 102 der Liftplattform 32 durchtritt, wenn das Gehäuse 40 mit dem Werkstück 18 dort abgestellt ist.

In dieser Ausführungsform ist ein Schwenkelement 104 im Wesentlichen L-förmig ausgebildet und an einer Achse 106 an der Liftplattform 32 im Übrigen gelagert. Dieses Schwenkelement 104 endet unten außen in der Greifhandhabe 62 und oben in einer Greifklaue 108, die so bemessen ist, dass sie bei Absenken der Greifhandhabe 62 das Gehäuse 40 übergreift und mit dem Absenken auch das Gehäuse 40 nach unten zieht.

Hierdurch ist ein Lösen der Schnappverbindung zwischen den Federzungenanordnungen 76 und den Halteelementen 44 und 46 des Magazins 22 möglich, um die Liftplattform 32 zusammen mit dem Werkstück 18 aus der oberen Position in die untere Position zu überführen.

## Patentansprüche

1. Werkzeugmaschine, insbesondere Fräsmaschine für Dentalzwecke, mit einem Werkstückmagazin (22) für die Aufnahme, gegebenenfalls mit Hilfe eines Gehäuses, von Werkstücken, wobei das Werkstückmagazin (22) gegenüber der Werkzeugmaschine (10) im Übrigen beweglich gelagert ist und eine Bestückungsposition (30) für die Bestückung des Magazins (22) mit einem neuen Werkstück (18) aufweist, **gekennzeichnet durch** ein Gehäuse (40), insbesondere ein Teilgehäuse, für jedes Werkstück (18), welches das Werkstück (18) mindestens teilweise aufnehmen kann, und durch eine Liftplattform (32), die der Bestückungsposition (30) benachbart angeordnet ist und auf der oder an der das Gehäuse (40) zusammen mit dem Werkstück (18) aufnehmbar und verfahrbar ist.

2. Werkzeugmaschine nach Anspruch 1, **dadurch gekennzeichnet, dass** die Liftplattform (32) im Wesentlichen vertikal verfahrbar ist, und insbesondere quer zur Bewegungsrichtung des Magazins (22), das bevorzugt als Rundmagazin ausgebildet ist, verfahrbar ist.

3. Werkzeugmaschine nach einem der vorhergehenden Ansprüche, **dadurch gekennzeichnet, dass** die Liftplattform (32) eine Greifhandhabe (62) für die manuelle im Wesentlichen vertikale Bewegung der Liftplattform (32) aufweist, oder einen Antrieb für die maschinelle im Wesentlichen vertikale Bewegung.

4. Werkzeugmaschine nach einem der vorhergehenden Ansprüche, **dadurch gekennzeichnet, dass** die Werkzeugmaschine ein Werkstück (18) aufweist, das ein Dentalwerkstück ist, das als Rohling zuführbar und über die gleiche Liftplattform (32) und die gleiche Bestückungsposition (30) als Dentalrestauration der Werkzeugmaschine (10) entnehmbar ist.

5. Werkzeugmaschine nach einem der vorhergehenden Ansprüche, **dadurch gekennzeichnet, dass** die Liftplattform (32) eine vertikale Schiebeführung (66) aufweist, die sich insbesondere parallel zu einer Drehachse des Werkstückmagazins (22) erstreckt.

6. Werkzeugmaschine nach einem der vorhergehenden Ansprüche, **dadurch gekennzeichnet, dass** das Werkstückmagazin (22) zugleich als Werkzeugmagazin ausgebildet ist, welches an vorgegebenen Drehpositionen Werkstücke (18) mit zugehörigen Gehäusen (40) und an anderen Drehpositionen Werkzeuge (20), insbesondere ebenfalls über Aufnahmegehäuse, aufnimmt.

7. Werkzeugmaschine nach einem der vorhergehenden Ansprüche, **dadurch gekennzeichnet, dass** an jeder Drehposition des Werkstückmagazins (22) mindestens ein Halteelement (44, 46) für die insbesondere rastbare Aufnahme eines Gehäuses (40) ausgebildet ist.

8. Werkzeugmaschine nach Anspruch 7, **dadurch gekennzeichnet, dass** jedes Gehäuse (40) an der der Aufnahmeposition des Werkstückmagazins (22) zugewandten Seite des Gehäuses (40) mindestens eine Rastzunge (84, 86) für den Eingriff in ein Halteelement (44, 46) aufweist.

9. Werkzeugmaschine nach einem der vorhergehenden Ansprüche, **dadurch gekennzeichnet, dass** die Werkzeugmaschine mindestens ein Werkstück (18) aufweist, wobei jedes Werkstück (18) eine Nut oder eine Ausnehmung (80) aufweist, die in ihrer Abmessung an Vorsprünge des Gehäuses (40) angepasst ist und in welche Vorsprünge des Gehäuses (40) einführbar sind.

10. Werkzeugmaschine nach einem der vorhergehenden Ansprüche, **dadurch gekennzeichnet, dass** für die Lagerung des Werkstücks (18) in dem Gehäuse (40) an dessen unterem Ende Rastzungen (84, 86) an den Vorsprüngen ausgebildet sind, die einen Halter (82) des Werkstücks (18), insbesondere in dessen Nut, mindestens teilweise umgreifen kann.

11. Werkzeugmaschine nach einem der vorhergehenden Ansprüche, **dadurch gekennzeichnet, dass** ein Teil des Werkstücks (18), insbesondere ein Halter (82) des Werkstücks (18), aus dem Gehäuse (40) herausragen kann, und dass insbesondere die Nuten an dem Halter (82) ausgebildet sind.

12. Werkzeugmaschine nach einem der Ansprüche 10 oder 11, **dadurch gekennzeichnet, dass** der Halter (82) in einer Übergabeposition des Werkstückmagazins (22) so aus dem Gehäuse (40) herausragen kann, dass er von einem Roboterarm (16) der Werkzeugmaschine (10) greifbar ist.

13. Werkzeugmaschine nach einem der vorhergehenden Ansprüche, **dadurch gekennzeichnet, dass** das Werkstück (18) in dem Gehäuse (40), insbesondere horizontal, verschiebbar gelagert werden kann und manuell oder über einen Roboterarm (16) durch seitliches Verschieben entnehmbar ist.

14. Werkzeugmaschine nach einem der Ansprüche 10 bis 13, **dadurch gekennzeichnet, dass** das Werkstückmagazin (22) oben an der Werkzeugmaschine (10) und - bezogen auf einen Fräsraum (12) und einen Roboterarm (16) - einer Frässpindel gegenüberliegend angeordnet ist, und dass die Gehäuse (40) mit Ihren Rastzungen (84, 86) an Halteelementen (44, 46) des Werkstückmagazins (22) hängen.

15. Werkzeugmaschine nach einem der Ansprüche 10 bis 14, **dadurch gekennzeichnet, dass** beim Anheben der Liftplattform (32) in die Bestückungsposition (30) das auf der Liftplattform (32) abgestellte Gehäuse (40) des Werkstücks (18) beim Einschnappen seiner Rastzungen (84, 86) an dem betreffenden Halteelement (44, 46) des Werkstückmagazins (22) dort hängen bleibt, auch wenn die Liftplattform (32) abgesenkt wird.

16. Werkzeugmaschine nach einem der vorhergehenden Ansprüche, **dadurch gekennzeichnet, dass** ein Halter (82) des Werkstücks (18) aus dem Gehäuse (40) heraushängt und in einer Ausnehmung (80) der Liftplattform (32) aufgenommen ist, wenn das Gehäuse (40) mit dem Werkstück (18) auf der Liftplattform (32) abgestellt ist.

17. Werkzeugmaschine nach einem der vorhergehenden Ansprüche, **dadurch gekennzeichnet, dass** das Gehäuse (40) das Werkstück (18) so weit umgeben kann, dass es der Liftplattform (32) nur zusammen mit dem Gehäuse (40) entnehmbar ist.

18. Werkzeugmaschine nach einem der vorhergehenden Ansprüche, **dadurch gekennzeichnet, dass** das Gehäuse (40) das Werkstück (18) so umgeben kann, dass das Werkstück (18) hinsichtlich seines keramischen Teils geschützt ist, und insbesondere zwei einander gegenüberliegende Seitenwände des Gehäuses (40) vorgesehen sind, die sich flächig erstrecken und an welchen das Gehäuse (40) greifbar ist.

19. System aus einer Werkzeugmaschine und einem Werkstück, **gekennzeichnet durch** die Merkmale von Anspruch 1 und/oder einem der Unteransprüche.

20. System nach Anspruch 19, **dadurch gekennzeichnet, dass** das Werkstück (18) aus einem fräsbaren oder schleifbaren oder anderweitig spanabhebend bearbeitbaren Keramikmaterial, insbesondere einer nicht fertig gesinterten Dentalkeramik wie Lithiummetasilikat, besteht.

## Claims

1. A machine tool, especially a milling machine for dental purposes, having a workpiece magazine (22) for receiving workpleces, optionally by using a housing, the workpiece magazine (22) furthermore being mounted so as to be movable in relation to the machine tool (10) and comprising a supply position (30) for supplying a new workpiece (18) to the magazine (22), **characterized by** a housing (40), especially a partial housing, for each workpiece (18), which can at least partially receive the workpiece (18), and by a lift platform (32) which is arranged adjacent to the supply position (30), and on or at which platform the housing (40), together with the workpiece (18), is receivable and displaceable.

2. The machine tool according to claim 1, **characterized in that** the lift platform (32) Is essentially displaceable in the vertical direction, and, especially is displaceable in the direction transversally to the direction of movement of the magazine (22), which preferably is designed as a round magazine.

3. The machine tool according to one of the preceding claims, **characterized in that** the lift platform (32) comprises a gripping handle (62) for manually, essentially vertically, moving the lift platform (32), or a drive for mechanically, essentially vertically, moving the lift platform (32).

4. The machine tool according to one of the preceding claims, **characterized in that** the machine tool comprises a workpiece (18), the workpiece (10) being a dental workpiece which is supplyable as a blank and is removable from the machine tool (10) as a dental restoration via the same lift platform (32) and the same supply position (30).

5. The machine tool according to one of the preceding claims, **characterized in that** the lift platform (32) comprises a vertical sliding guide (66) which especially extends parallel to a rotational axis of the workpiece magazine (22).

6. The machine tool according to one of the preceding claims, **characterized in that** the workpiece magazine (22) is simultaneously designed as a tool magazine which, at predetermined rotational positions, receives workpieces (18) with associated housings (40) and, at other rotational positions, accommodates tools (20), especially similarly via receiving housings.

7. The machine tool according to one of the preceding claims, **characterized in that**, at each rotational position of the workpiece magazine (22), at least one holding member (44, 46) is formed for especially latchably receiving a housing (40).

8. The machine tool according to claim 7, **characterized in that** each housing (40) has at least one latching tongue (84, 86) for engaging a retention element (44, 46) on the side of the housing (40) facing the receiving position of the workpiece magazine (22).

9. The machine tool according to one of the preceding claims, **characterized in that** the machine tool has at least one workpiece (18), each workpiece (18) comprising a groove or recess (80) the dimension of which matches projections of the housing (40) and into which recesses projections of the housing (40) may be inserted.

10. The machine tool according to one of the preceding claims, **characterized in that**, for mounting the workpiece (18) in the housing (40) at its lower end, latching tongues (84, 86) are provided on the projections, which may at least partially engage around a holder (82) of the workpiece (18), and especially may engage therearound while engaging in its groove.

11. The machine tool according to one of the preceding claims, **characterized in that** a part of the workpiece (18), especially a holder (82) of the workpiece (18), may project from the housing (40), and **in that** especially the grooves are provided on the holder (82).

12. The machine tool according to one of claims 10 or 11, **characterized in that** the holder (82), in a transfer position of the workpiece magazine (22), may project from the housing (40) such that it can be gripped by a robot arm (16) of the machine tool (10).

13. The machine tool according to one of the preceding claims, **characterized in that** the workpiece (18) may be displaceably, especially horizontally, mounted in the housing (40), arid may be removed manually or via a robot arm (16) by lateral displacement thereof.

14. The machine tool according to one of the claims 10 to 13, **characterized in that** the workpiece magazine (22) is arranged on top of the machine tool (10) and - relative to a milling chamber (12) and a robot arm (16) - opposite to a milling spindle, and **in that** the housings (40), with their latching tongues (84, 86), are suspended from holding members (44, 46) of the workpiece magazine (22).

15. The machine tool according to one of the claims 10 to 14, **characterized In that**, when lifting the lift platform (32) into the supply position (30), the housing (40) of the workpiece (18) placed on the lift platform (32) remains suspended from the respective holding member (44, 46) of the workpiece magazine (22) when the latching tongues (84, 86) thereof become latched, even if the lift platform (32) is lowered.

16. The machine tool according to one of the preceding claims, **characterized in that** a holder (82) of the workpiece (18) is suspended from the housing (40) and is received in a recess (80) of the lift platform (32) when the housing (40) with the workpiece (18) is placed onto the lift platform (32).

17. The machine tool according to one of the preceding claims, **characterized in that** the housing (40) may surround the workpiece (18 so far, such that it may be removed from the lift platform (32) only in together with the housing (40).

18. The machine tool according to one of the preceding claims, **characterized in that** the housing (40) may surround the workpiece (18), such that the workpiece (18) is protected with regard to the ceramic portion thereof, and especially two side walls of the housing (40) opposite to each other and extending two-dimensionally are provided, and on which side walls the housing (40) may be gripped.

19. A system comprising a machine tool and a workpiece, **characterized by** the features of claim 1 and/or one of the subclaims.

20. The system according to claim 19, **characterized in that** the workpiece (18) consists of a ceramic material which can be milled or ground or otherwise machined, especially an unfinished sintered dental ceramic such as lithium metasilicate.

## Revendications

1. Machine-outil, en particulier fraiseuse à usage dentaire, ayant un magasin de pièces à usiner destiné à recevoir des pièces à usiner, éventuellement à l'aide d'un boitier, où le magasin de pièces à usiner (22) est monté en face de la machine-outil (10) de manière mobile et comporte une position de chargement (30) pour le chargement du magasin (22) avec une nouvelle pièce à usiner (18), **caractérisée par** un boîtier (40), en particulier un boitier partiel, pour chaque pièce à usiner (18), qui peut recevoir au moins partiellement la pièce à usiner (18), et par une plateforme élévatrice (32), qui est disposée à proximité de la position de chargement (30) et peut être reçu et déplacé avec la pièce à usiner (18) sur ou contre le boitier (40).

2. Machine-outil selon la revendication 1, **caractérisée en ce que** la plateforme élévatrice (32) peut être déplacée essentiellement verticalement et, en particulier, transversalement à la direction de déplacement du magasin (22), qui est de préférence conçu comme un magasin rond.

3. Machine-outil selon l'une des revendications précédentes, **caractérisée en ce que** la plateforme élévatrice (32) présente une poignée de préhension (62) pour le mouvement manuel, essentiellement vertical, de la plateforme élévatrice (32) ou un entraînement pour le mouvement mécanique, essentiellement vertical.

4. Machine-outil selon l'une des revendications précédentes, **caractérisée en ce que** la machine-outil présente une pièce à usiner (18)qui est une pièce à usiner dentaire qui peut être introduite comme lingotin et peut être retirée de la machine-outil (10) par la même plateforme élévatrice (32) et la même position de chargement (30) comme restauration dentaire.

5. Machine-outil selon l'une des revendications précédentes, **caractérisée en ce que** la plateforme élévatrice (32) présente un guidage coulissant vertical (66) qui s'étend notamment parallèlement à un axe de rotation du magasin de pièce à usiner (22).

6. Machine-outil selon l'une des revendications précédentes, **caractérisée** en ce quele magasin de pièces à usiner (22) est conçu en même temps comme magasin d'outils qui, à des positions de rotation prédéterminées, reçoit des pièces à usiner (18) avec des boitiers associés (40) et dans d'autres positions de rotation reçoit des outils (20), en particulier également par des boitiers de réception.

7. Machine-outil selon l'une des revendications précédentes, **caractérisée en ce qu'**à chaque position de rotation du magasin de pièces à usiner (22) au moins un élément de maintien (44, 46) est formé pour la réception, en particulier encllquetable, d'un boitier (40).

8. Machine-outil selon la revendication 7, **caractérisée en ce que** chaque boitier (40) présente au moins une languette d'encliquetage (84, 86) destinée à s'engager dans un élément de maintien (44, 46) sur le côté du boitier (40) tourné vers la position de réception du magasin de pièces à usiner (22).

9. Machine-outil selon l'une des revendications précédentes, **caractérisée en ce que** la machine-outil présente au moins une pièce à usiner (18), où chaque pièce à usiner (18) présente une rainure ou un évidement (80) dont la dimension est adapté aux saillies du boitier (40) et dans lesquelles des saillies du boitier (40) peuvent être introduites.

10. Machine-outil selon l'une des revendications précédentes, **caractérisée en ce que**, des languettes de verrouillage (84, 86) pour le montage de la pièce à usiner (18) dans le boitier (40) sont formées sur les saillies à l'extrémité inférieure de celui-ci, qui peuvent entourer au moins partiellement un support de maintien (82) de la pièce à usiner (18), en particulier dans sa rainure.

11. Machine-outil selon l'une des revendications précédentes, **caractérisée en ce qu'**une partie de la pièce à usiner (18), en particulier un support de maintien (82) de la pièce à usiner (18), peut dépasser du boitier (40) et en particulier **en ce que** les rainures sont formées sur ledit support (82).

12. Machine-outil selon l'une des revendications 10 ou 11, **caractérisée en ce que** le support de maintien (82), dans une position de transfert du magasin de pièces à usiner (22), peut faire saillie à partir du boitier (40) de telle manière à pouvoir être saisi par un bras robotique (16) de la machine outil (10).

13. Machine-outil selon l'une des revendications précédentes, **caractérisée en ce que** la pièce à usiner (18) peut être montée de manière coulissante dans le boitier (40), en particulier horizontalement, et peut être enlevée manuellement ou par un bras de robot (16) par déplacement latéral.

14. Machine-outil selon l'une des revendications 10 à 13, **caractérisée en ce que** le magasin de pièce à usiner (22) est disposé en haut de la machine-outil (10) et en face d'une broche de fraisage par rapport à une chambre de fraisage (12) et à un bras robotique (16), et que les boitiers (40) sont suspendus avec leurs languettes de verrouillage (84, 86) sur les éléments de fixation (44, 46) du magasin de pièces à usiner (22).

15. Machine-outil selon l'une des revendications 10 à 14, **caractérisée en ce que**, lorsque la plateforme élévatrice (32) est soulevée dans la position de chargement (30), le boitier (40) de la pièce à usiner (18), qui est placé sur la plateforme élévatrice (32), y reste suspendu après l'enclenchement des languettes d'encliquetage (84, 86) sur l'élément de maintien respectif (44, 46) du magasin à pièce à usiner (22) même lorsque la plateforme élévatrice (32) est abaissée.

16. Machine-outil selon l'une des revendications précédentes, **caractérisée en ce qu'**un support de maintien (82) de la pièce à usiner (18) pend hors du boitier (40) et est reçu dans un évidement (80) de la plateforme élévatrice (32) lorsque le boitier (40) avec la pièce à usiner (18) est placé sur la plateforme élévatrice (32).

17. machine-outil selon l'une des revendications précédentes, **caractérisée en ce que** le boitier (40) peut entourer la pièce à usiner (18) à un point tel qu'il ne peut pas être retiré de la plateforme élévatrice (32) sans le boitier (40).

18. Machine-outil selon l'une des revendications précédentes, **caractérisée en ce que** le boitier (40) peut entourer la pièce à usiner (18) de telle manière que la pièce à usiner (18) est protégée par rapport à sa partie céramique, et en particulier deux parois latérales du boitier (40) sont prévues, l'une en face de l'autre, qui s'étendent sur la surface et sur lesquelles le boitier (40) peut être saisi.

19. Système comprenant une machine-outil et une pièce, **caractérisé par** les caractéristiques de la revendication 1 et/ou de l'une des revendications secondaires.

20. Système selon la revendication 19, **caractérisée en ce que** la pièce à usiner (18) est constituée d'un matériau céramique qui peut être fraisé, poncé ou autrement usiné par enlèvement de copeaux, en particulier une céramique dentaire frittée non finie comme le métasilicate de lithium.
